# EUROPEAN PATENT APPLICATION

(11) **EP 2 330 504 A1**
(43) Date of publication of application: **08.06.2011**
(21) Application number: 11000326.6
(22) Date of filing: 23.06.2006
(51) Int. Cl.: G06F 9/45

(54) **Lambda expressions**

(30) Priority: 29.07.2005 US 193565
(62) Divisional of application: 06773880.7
(71) Applicant: Microsoft Corporation, Redmond, WA 98052-6399 (US)
(72) Inventor: Meijer, Henricus, Johannes, Maria, Redmond, WA 98052-6399 (US); Hejlsberg, Anders, Redmond, WA 98052-6399 (US); Box, Donald, F., Redmond, WA 98052-6399 (US); Warren, Matthew, J., Redmond, WA 98052-6399 (US); Bolognese, Luca, Redmond, WA 98052-6399 (US); Katzenberger, Gary, S., Redmond, WA 98052-6399 (US); Hallam, Peter, A., Redmond, WA 98052-6399 (US); Kulkarni, Dinesh, Chandrakant, Redmond, WA 98052-6399 (US)
(74) Representative: Grünecker, Kinkeldey, Stockmair & Schwanhäusser Anwaltssozietät

(57) **Abstract**

The subject disclosure pertains to lambda expressions and the employment of such expressions in imperative and/or object-oriented computer programming languages. Lambda expressions can be employed in conjunction with methods (*e.g.,* arguments, assignment...) to provide a more concise and functional manner of code specification. Further, lambda expressions can participate in type inference and checking as well as overload resolution, among other things.

## Description

### BACKGROUND

Programming languages continue to evolve to facilitate specification by programmers as well as efficient execution. In the early days of computer languages, low-level machine code was prevalent. With machine code, a computer program or instructions comprising a computer program were written with machine languages or assembly languages and executed by the hardware (*e.g.,* microprocessor). These languages provided an efficient means to control computing hardware, but were very difficult for programmers to comprehend and develop sophisticated logic. Subsequently, languages were introduced that provided various layers of abstraction. Accordingly, programmers could write programs at a higher level with a higher-level source language, which could then be converted *via* a compiler or interpreter to the lower level machine language understood by the hardware. Further advances in programming have provided additional layers of abstraction to allow more advanced programming logic to be specified much quicker then ever before. However, these advances do not come without a processing cost.

Compilers and/or interpreters bear the burden of translating high-level logic into executable machine code. In general, a compilers and/or interpreters are components that receive a program specified in a source programming language (*e.g.,* C, C#, Visual Basic, Java...) and covert the logic provided thereby to machine language that is executable by a hardware device. However, the conversion need not be done verbatim. In fact, conventional compilers and/or interpreters analyze the source code and generate very efficient code. For example, programmers write code that sets forth a logical flow of operations that is intuitive and easy for humans to understand, but is often inefficient for a computer to execute. Compilers and/or interpreters can identify inefficiencies and improve program performance at the hardware level by eliminating unnecessary operations and/or rearranging the execution of instructions while still achieving the intended results. In this manner, programmers can create robust and efficient software programs.

### SUMMARY

The following presents a simplified summary in order to provide a basic understanding of some aspects of the claimed subject matter. This summary is not an extensive overview. It is not intended to identify key/critical elements or to delineate the scope of the claimed subject matter. Its sole purpose is to present some concepts in a simplified form as a prelude to the more detailed description that is presented later.

Briefly described, the provided subject matter concerns lambda expressions and the employment of such expressions in imperative and/or object oriented computer-programming languages. Lambda expressions provide a more concise manner of specifying values or data than conventional forms. For example, lambda expressions can provide a more succinct and functional way to specify anonymous methods.

Lambda expressions can also participate in type inference. The lambda expression need not have a type by itself. Rather, it can have parameter types and return types, among others. To reduce the verbosity associated with the specification of lambda expressions, these types do not have to be stated explicitly. Systems and methods are provided for inferring these types based on context.

Still further yet lambda expressions can facilitate overload resolution. In cases where a method is overloaded, for example, a lambda expression can facilitate selection of a particular method. For instance, where a lambda expression is employed as an argument to an overloaded method the return type of the expression can be utilized as a factor in selecting a specific method.

To the accomplishment of the foregoing and related ends, certain illustrative aspects of the claimed subject matter are described herein in connection with the following description and the annexed drawings. These aspects are indicative of various ways in which the subject matter may be practiced, all of which are intended to be within the scope of the claimed subject matter. Other advantages and novel features may become apparent from the following detailed description when considered in conjunction with the drawings.

### BRIEF DESCRIPTION OF THE DRAWINGS

Fig. 1 is a block diagram of an execution system for lambda expressions.

Fig. 2 is a block diagram of a programming system for that supports lambda expressions.

Fig. 3 is a block diagram of a type conversion system.

Fig. 4 is a block diagram of a type inference system to infer types associated with lambda expressions.

Fig. 5 is a block diagram of a type check system that type checks lambda expressions.

Fig. 6 is a block diagram of an overload resolution system.

Fig. 7 is a flow chart diagram of a lambda expression execution methodology.

Fig. 8 is a flow chart diagram of a programming methodology.

Fig. 9 is a flow chart diagram of a lambda expression conversion methodology.

Fig. 10 is a flow chart diagram of a type inference method associated with lambda expressions.

Fig. 11 is a flow chart diagram of an exemplary type inference methodology.

Fig. 12 is a flow chart diagram of an overload resolution methodology.

Fig. 13 is a schematic block diagram of a compilation environment.

Fig. 14 is a schematic block diagram illustrating a suitable operating environment.

Fig. 15 is a schematic block diagram of a sample-computing environment.

### DETAILED DESCRIPTION

The various aspects of the subject invention are now described with reference to the annexed drawings, wherein like numerals refer to like or corresponding elements throughout. It should be understood, however, that the drawings and detailed description relating thereto are not intended to limit the claimed subject matter to the particular form disclosed. Rather, the intention is to cover all modifications, equivalents, and alternatives falling within the spirit and scope of the claimed subject matter.

As used herein, the terms "component," "system" and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on computer and the computer can be a component. One or more components may reside within a process and/or thread of execution and a component may be localized on one computer and/or distributed between two or more computers.

The word "exemplary" is used herein to mean serving as an example, instance, or illustration. Any aspect or design described herein as "exemplary" is not necessarily to be construed as preferred or advantageous over other aspects or designs.

Furthermore, the disclosed subject matter may be implemented as a system, method, apparatus, or article of manufacture using standard programming and/or engineering techniques to produce software, firmware, hardware, or any combination thereof to control a computer or processor based device to implement aspects detailed herein. The term "article of manufacture" (or alternatively, "computer program product") as used herein is intended to encompass a computer program accessible from any computer-readable device, carrier, or media. For example, computer readable media can include but are not limited to magnetic storage devices (*e.g.,* hard disk, floppy disk, magnetic strips...), optical disks (*e.g.,* compact disk (CD), digital versatile disk (DVD)...), smart cards, and flash memory devices (*e.g.,* card, stick). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope or spirit of the claimed subject matter.

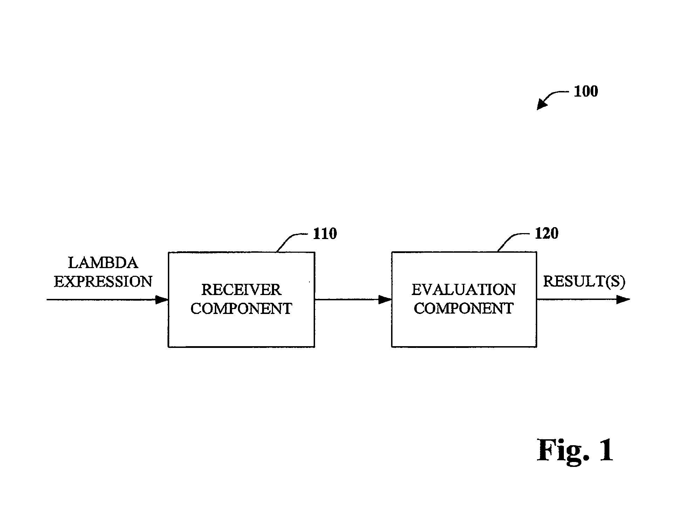

Turning initially to Fig. 1, an execution system 100 is illustrated for execution of lambda expressions. System 100 includes a receiver component 110 and an evaluation component 120. Receiver component 110 obtains a lambda expression and transmits the expression to evaluation component 120. Evaluation component 120 obtains the expression, computes and returns a value of a particular type.

A lambda expression is a mechanism to succinctly specify or capture values and data, among other things. In one instance, lambda expressions can be employed to specify or replace anonymous methods. Anonymous methods allow programmatic code associated with a delegate, for example, to be expressed or written "in-line." By way of example, assume one desires to query over a collection of customers expressed in C# as IEnumerable <customer> cs. A query that returns customers younger than 35 years old could be specified as: cs.where(new Func (x.f))
Class x
{
...
static bool f(customer c) {return c.age < 35;}
..
}
An anonymous method could alternatively be specified to simplify specification of such an expression, for instance:
cs.where(delegate (Customer c) {return c.age <35;})
This is more succinct than the previous example at least because a new class does not need to be specified. Rather, the anonymous method identified by the delegate keyword is in-lined as an argument. However, the specification of an anonymous method is still quite verbose. Hence, a lambda expression can be employed in place of an anonymous method. In accordance with the previous example, a lambda expression can be utilized to specify information much more succinctly as well functionally. In particular, the lambda expression can correspond to:
cs.where(|c| c.age<35)
Here, the parameter "c" is identified as well as the expression "c.age<35." This is much less verbose than previous representations at least because it eliminates unnecessary syntax and the explicit type declaration (*e.g.,* Customer).

A lambda expression can be specified as a parameter list enclosed by vertical bars followed by an expression or expression body. For example a lambda expression be structured as specified in pseudo-BNF (Backus-Naur Form):
lambda-expression:
   | lambda-paramter-listₒₚₜ | lambda-expression-body
lambda-parameter-list:
   explicitly-typed-lambda-parameter-list
   implicitly-typed-lambda-parameter-list
explicitly-typed-lambda-parameter-list
   explicitly-typed-lambda-parameter
   explicitly-typed-lambda-parameter-list, explicitly-typed-lambda-parameter
explicitly-typed-lambda-parameter:
   type identifier
implicitly-typed-lambda-parameter-list
   implicitly-typed-lambda-parameter
implicitly-typed-lambda-parameter-list, implicitly-typed-lambda-parameter implicitly-typed-lambda-parameter:
   identifier
lambda-expression-body:
   expression

A lambda expression can have the general form |parameter(s)| expression. However, additional manners of specification are also contemplated. For example, a lambda expression could be declared in the form parameter(s)=>expression, (parameter(s))=>expression, as well as other combinations or permutations of delimiters and/or symbols. The syntax may also differ in cases where the lambda expression has an empty parameter list. Where vertical bars delimit parameters from an expression and there is an empty parameter list, the resulting token would be adjacent bar characters (*e.g.,* ∥ or | |). This could produce ambiguity with respect to the adjacent bars that are utilized to represent the conditional "OR" in some programming languages. Hence, an alterative representation can be employed such as, but not limited to, adjacent bars followed by an equal character (*e.g*., | |=). However, it should be appreciated that the adjacent bar characters can be overloaded and utilized to represent an empty parameter list as well as the conditional "OR."

A lambda expression of the form "| *parameter(s)* | *expression*" can correspond to an anonymous method of the form "delegate (*parameter(s)*) {return *expression*;}." Accordingly, a lambda expression can replace the more verbose anonymous method. Nevertheless, there are differences between lambda expressions and anonymous methods. Among other things, lambda expressions permit parameter types to be omitted and inferred (as described in detail *infra*) whereas anonymous methods require parameter types to be explicitly stated. Additionally, the body of an anonymous method is written as a statement block while the body of a lambda expression can be either an expression or a statement block.

Returning to Fig. 1, the receiver component 110 receives, retrieves or otherwise obtains a lambda expression described above or representation thereof. The lambda expression can then be transmitted to the evaluation component 120. The evaluation component 120 computes the value associated with the lambda expression and returns such value. By way of example and not limitation, system 100 can be associated with a program execution system. The lambda expression could be part of a program statement or other construct such as an argument and the value returned could be further utilized in processing the associated statement. Furthermore, the receiver component 110 and evaluation component 120 can cooperate to enable evaluation of nested and/or hierarchical lambda expressions. For example:
cs.where(|c| c.age<35).Select(|c| new{name=c.name, age=c.age})
This statement denotes that customer names and ages are selected ("Select(|c| new{name = c.name, age = c.age})) and from that collection customers (cs) are identified where their age is less than thirty-five (cs.where (|c| c.age<35)).

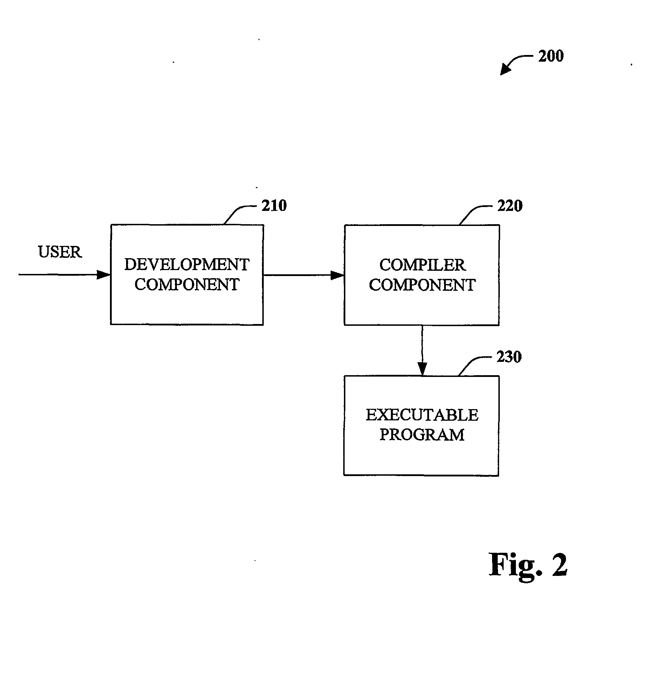

Fig. 2 depicts a programming system or environment 200 for lambda expressions. System 200 includes a development component 210, compiler component 220 and executable program 230. Development component 210 receives input from users such as programmers. The input can include a plurality of programmatic statements or constructs that include at least one lambda expression. For example, a statement can include a lambda expression as an argument or assigned to a function or type. The expression can be denoted in any one of a plurality of forms, including but not limited to utilizing adjacent bars (*e.g.,* |c| c.age<35) or a double arrow (*e.g.,* c=>c.age) to separate parameters from the expression body. The development component 210 can correspond to a code editor (*e.g.,* text or graphical), an integrated development environment (IDE) or the like. The compiler component 220 (described in further detail *infra*) can receive the programmatic source code from the development component 210 and generate computer executable program 230 or alternatively some intermediate format (*e.g.,* IL (intermediate language)) that can be further compiled at runtime, for example by a just-in-time (JIT) compiler. The compiler component 220 could also be a part of an IDE.

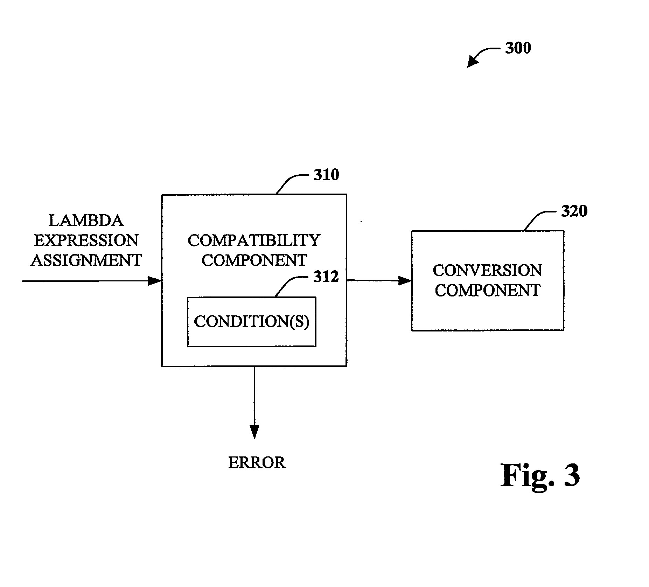

Fig. 3 depicts a type conversion system 300. A lambda expression can be classified as a value with special conversion rules. The lambda expression does not have a type, but can be converted (*e.g.,* implicitly) to a compatible type such as delegate type. System 300 includes a compatibility component 310 and a conversion component 320. Both components could be located in a compiler such as compiler component 220 of Fig. 2. The compatibility component 310 receives lambda expression assignments, for example consisting of a lambda expression and a delegate type function. Subsequently, the compatibility component can analyze the assignment type with respect to some rules or conditions 312 to determine if the assignment type is compatible with the lambda expression. If the conditions 312 are not met the assigned type is not compatible and an error or exception can be generated by the compatibility component 310. Alternatively, if the conditions 310 are satisfied and the type is compatible with a lambda expression then the expression can be converted to this type by the conversion component 320.

By way of example and not limitation, a delegate type D can be compatible with a lambda expression L when various conditions 312 are met. For example, D may have to have a non-void return type and no ref or out parameters. Additionally or alternatively, the D and L may have to have the same number of parameters and if L has an explicitly typed parameter list, the type of each parameter in D must be the same as the type of the corresponding parameter in L. Additionally or alternatively, when a parameter of L is given the type of the corresponding parameter in D, the expression body of L can be a valid expression that is implicitly convertible to the return type of D. By way of example, assume a generic delegate type Function <A, R> that represents a function taking an argument of type A and returning a value of type R:
delegate R Function<A,R>(A, arg);
Further, assume the following assignment:
Func<int, int> f = |x| x +1;
The lambda expression |x| x+ 1 can be successfully converted by the conversion component 320 to the delegate type Func<int, int> because when x is given type int, x+1 is a valid expression that is implicitly convertible to type int. The assignment is equivalent to the more verbose anonymous method:
Function<int, int> f = delegate(int x) {return x + 1};
It should be noted that the lambda expression permits but does not require the type of x to be inferred, whereas the anonymous method requires the type to be explicitly stated.

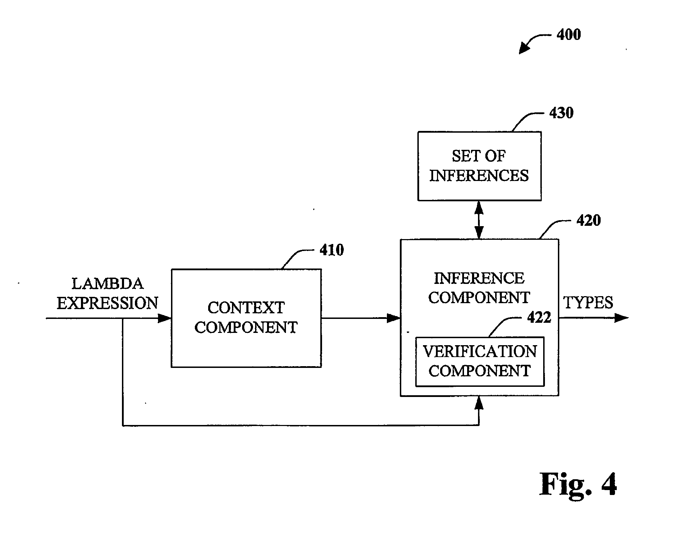

Turning to Fig. 4, a type inference system 400 is depicted that enables inference with respect to lambda expressions. The type inference system 400 can be part of a compiler such as compiler component 220 (Fig. 2). Type inference system 400 includes a context component 410 and an inference component 420. The context component 410, upon receipt or identification of a lambda expression, receives, retrieves or otherwise obtains context information related to the particular lambda expression, for instance from the program from which the lambda expression is obtained. Such context information can be any information related to the lambda expression including statements, expressions, classes, types, and the like. The context information is obtained by the inference component 420 from the context component 410, for example *via* transmission of a data packet(s). Furthermore, the lambda expression can be provided to the inference component 420 to facilitate type inference of types associated therewith. The inference component 420 can subsequently utilize the context information to infer types such as those of a lambda expression parameter, expression body and/or return type. Of course, type inferences can be propagated such that inferred types aid in inferring types of other elements. Accordingly, the inference component 420 can generate and maintain a set of inferences 430 that can be employed to make additional inferences.

It should be appreciated that the lambda expression itself does not have a type associated therewith such as a structural type. Rather, the parameter(s) and expression body or return value have associated types. It has been recognized that inference of structural types is non-trivial for object oriented languages. Consider the following exemplary lambda expression and classes defining objects:
var f = (|x| x.age)
class Customer
   {int age}
class Wine
   {string age}
By simply analyzing the structure of the lambda expression and the customer and wine object classes, the type of the parameter (x) and return expression value (x.age) cannot be determined. The parameter could have type customer, which returns type integer for age. Alternatively, the parameter could be of type wine that returns type string for age.

However, the types can be inferred from context. Consider the following declaration:
delegate R Func <A, R> (A arg)
Func<Customer, bool> f = |x| x.age < 35;
A delegate type that takes an A and returns an R is specified. The lambda expression is then assigned to a delegate function. From such additional context information, type can be inferred. Based on the assignment of the lambda expression to the function, the inference component 420 can determine that the argument S must be Customer. The inference component 420 can then infer that the parameter x is of type Customer. From this, x.age can be determined to be of type integer from the Customer class or object definition. Subsequently, the type inference can then be verified, for example *via* verification component 422, by comparing the return types. Here, the delegate function Func returns type Boolean (bool) and the lambda expression returns type Boolean *via* a determination of whether age is less than thirty-five. Accordingly, the inference component was able to successfully infer types associated with lambda expressions based on context. In effect, the assignment of the lambda expression to the delegate function enabled context and type information to be pushed down to the lambda expression.

To facilitate clarity and understanding of type inference involving lambda expressions another exemplary scenario will be described. Consider the following class definition in C#:

```
 Namespace System.Query
 {
      public static class Sequence
      {
             public static IEnumerable<S> Select<T,S>(
                   this IEnumerable<T> source, Func<T, S> selector)
             {
                   foreach (T element in source) yield return selector (element);
             }
       }
 }
```

Assuming the System.Query namespace was imported, for example with the using clause, and given a class Customer with a Name property of type string, the Select method can be employed to select names from a list of customers. For instance:
List<Customer> customers = GetCustomerList();
IEnumerable<string> names = customers.Select(|c| c.Name);
An extension method invocation of Select can be processed by rewriting the invocation to a static method invocation:
IEnumerable<string> names = Sequence.Select(customers, |c| c.Name);
Type inference can be utilized to infer the type of the arguments. Context information reveals that the customers argument is related to the source parameter, thus T can be inferred to be Customer. Subsequently, c can be give type Customer and the expression c.Name is related to the return type of the selector parameter, inferring S to be a string. Thus, the invocation is equivalent to:
Sequence.Select<Customer, string> (customers, |Customer c| c.Name)
and the result is of type IEnumerable<string>.

The following example illustrates how lambda type inference allows type information to "flow" between arguments in a generic method invocation. Assume the following method and invocation thereof:

```
Static Z F<X, Y, X>(X value, Func<X, Y> f1, Func<Y, Z> f2 {
         return f2(f1(value));
}
```

double seconds = F("1:15:30", |s| TimeSpan.Parse(s), |t| t.TotalSeconds);
Type inference for the invocation proceeds first with the argument "1:15:30" which is related to the value parameter. Thus, X can be inferred to be a string based on this argument. Next, the parameter of the first lambda expression, s, is given the inferred type string. The expression TimeSpan.Parse(s) is related to the return type of f1 (Y), thus this can be inferred to be System.TimeSpan. Finally, the parameter of the second lambda expression, t, is given the inferred type System.TimeSpan, and the expression t.TotalSeconds is related to the return type of f2 enabling Z to be inferred to be of type double base on the System.TimeSpan class (not shown). Thus, the result of the invocation is of type double.

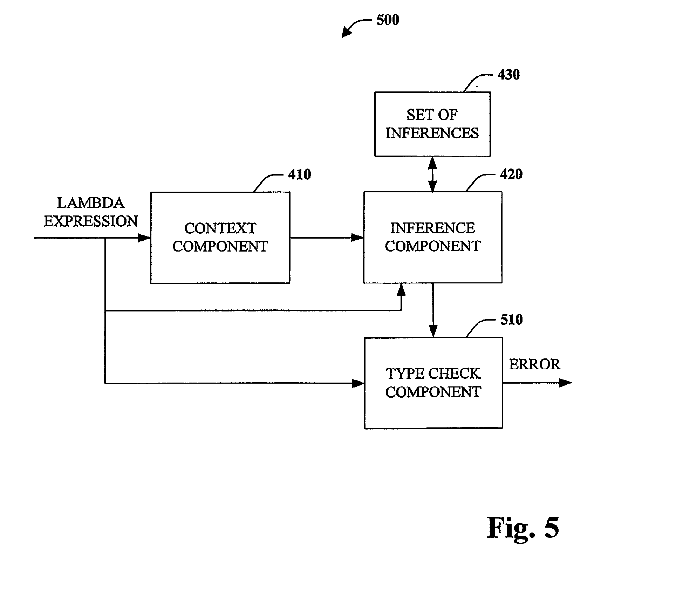

Turning to Fig. 5 a type check system 500 is illustrated to support type checking lambda expressions. Similar to system 400 of Fig. 4, system 500 can form part of a compiler. Type check system 500 includes a context component 410, an inference component 420 as well as a type check component 510. Context component 410 obtains or identifies a lambda expression and retrieves context information related to the lambda expression, for instance from the program including the lambda expression. Such context information can be any statements, expressions, classes, types, and the like associated directly or indirectly with a lambda expression. Inference component 420 receives the context information as well as the lambda expression to be checked. Inference component 420 can utilize context information provided by the context component 410 as well as other inferences in a set of inferences 430 to infer types, for example for lambda expression parameters, expressions, elements thereof, and/or return types. While type can be omitted from lambda expressions for purposes of reducing verbosity, such types can also be declared explicitly. In such a scenario, type check component 510 can compare the expected or inferred type and the explicit type to determine if they match. More particularly, type check component 510 can receive inferred types from the interface component 420. Furthermore, explicit types can be obtained from a lambda expression provided to the type check component 510 or passed with the inferred types. The type check component 510 can compare the explicit type and the inferred type. If the types match, no action needs to be taken. Alternatively, if the types do not match, the type component can generate an error or exception noting this fact.

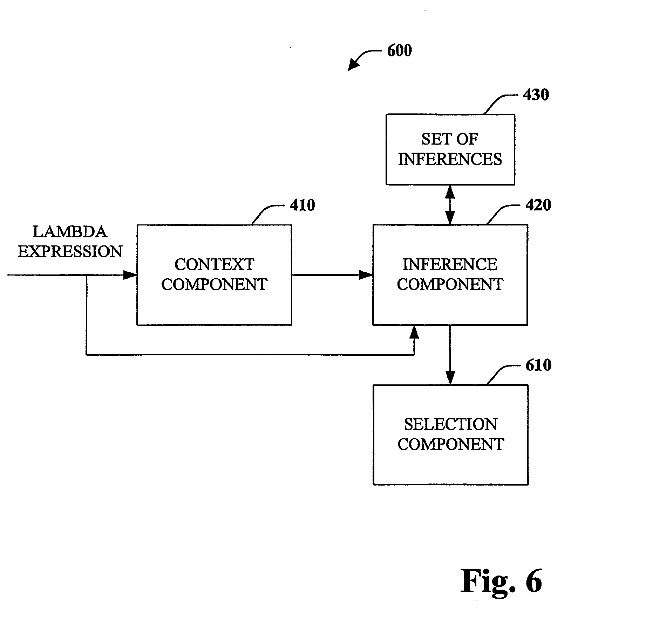

Fig. 6 illustrates an overload resolution system 600. System 600 can include context component 410, inference component 420, and selection component 610. Lambda expressions in an argument, for example, can affect overload resolution in certain situations. Context component 410 can receive, retrieve or otherwise obtain context information relating to a lambda expression. Such context information can be transmitted to the inference component 420. The inference component 420 can utilize context information as well as one or more past inferences 430 (set of inferences) to infer types for example associated with a lambda expression. These inferred types can then be passed to the selection component 610. The selection component 610 can employ this information to determine or select a method or delegate type where such a method is overloaded. A lambda type can subsequently be converted to a particular delegate type, for instance.

Various procedures or protocols can be employed by the selection component 610 to select an overloaded method or delegate type. For instance, given a lambda expression L, an implicit conversion of L to a delegate type D1 is a better conversion than an implicit conversion of L to a delegate type D2 if D1 and D2 have identical parameter lists and the implicit conversion from L's return type to D1's return type is a better conversion than the implicit conversion from L's return type to D2's return type. If these conditions are not true, neither conversion is better. Of course, the opposite is also true. Consider the following example:

```
 class ItemList<T>: List<T>
 {
      public int Sum<T>(Func<T, int> selector){
             int sum = 0;
             foreach (T item in this) sum +=selector(item);
             return sum;
      }
      public double Sum<T> (Func<T, double> selector){
            double sum = 0;
            foreach (T item in this) sum +=selector(item);
             return sum;
      }
 }
```

The ItemList<T> class has two Sum methods. Each method takes a selector argument, which extracts the value to sum over from a list item. The extracted value can be either an integer or double and the resulting sum is likewise either an integer or double. The Sum methods could be used to compute sums from a list of detail lines in an order, for example:

```
 class Detail
 {
      public int UnitCount;
      public int double UnitPrice
      ...
 }
 void ComputeSum(){
      ItemList<Detail> orderDetails = GetOrderDetails(...);
      int totalUnits = orderDetails.Sum(|d| d.UnitCount);
      double orderTotal = orderDetails.Sum(|d| d.UnitPrice * d.UnitCount);
       ...
 }
```

In the first invocation of orderDetails.Sum, both Sum methods are applicable because the lambda expression |d| d.UnitCount is compatible with both Function<Detail, int> and Function<Detail, double>. However, overload resolution *via* selection component 610 picks the first Sum method because the conversion to Function<Detail, int> is better than the conversion to Function<Detail, double>. In particular, UnitCount is of type integer.

In the second invocation of orderDetails.Sum, only the second Sum method is applicable because the lambda expression |d| d.UnitPrice * d.UnitCount produces a value of type double. Thus, the selection component 610 would pick the second Sum method for that invocation.

The aforementioned systems have been described with respect to interaction between several components. It should be appreciated that such systems and components can include those components or sub-components specified therein, some of the specified components or sub-components, and/or additional components. For example, a system could include context component 410, inference component 420, type checker component 510, and selection component 610 or a combination thereof. Sub-components could also be implemented as components communicatively coupled to other components rather than included within parent components. Additionally, it should be noted that one or more components may be combined into a single component providing aggregate functionality or divided into several sub-components. The components may also interact with one or more other components not specifically described herein but known by those of skill in the art.

Furthermore, as will be appreciated various portions of the disclosed systems above and methods below may include or consist of artificial intelligence or knowledge or rule based components, sub-components, processes, means, methodologies, or mechanisms (*e.g.,* support vector machines, neural networks, expert systems, Bayesian belief networks, fuzzy logic, data fusion engines, classifiers...). Such components, *inter alia,* can automate certain mechanisms or processes performed thereby to make portions of the systems and methods more adaptive as well as efficient and intelligent. For example, inference component 420 could utilize artificial intelligence, machine learning or like mechanisms to facilitate inference of types. Additionally or alternatively, selection component 610 can employ such intelligent mechanisms to facilitate overload resolution.

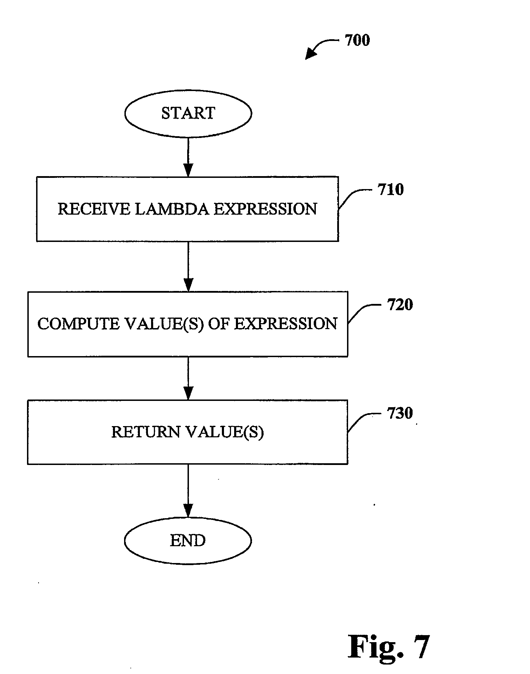

In view of the exemplary systems described *supra,* methodologies that may be implemented in accordance with the disclosed subject matter will be better appreciated with reference to the flow charts of Figs. 7-12. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described hereinafter.

Additionally, it should be further appreciated that the methodologies disclosed hereinafter and throughout this specification are capable of being stored on an article of manufacture to facilitate transporting and transferring such methodologies to computers. The term article of manufacture, as used, is intended to encompass a computer program accessible from any computer-readable device, carrier, or media.

Turning to Fig. 7, a method of lambda expression execution 700 is depicted. At reference numeral 710, a lambda expression is received, retrieved or identified. A lambda expression can include zero or more parameters and an expression or expression body. The parameters can be delimited from the expression in a plurality of manners. For instance, lambda expression parameters could be encompassed within two vertical bars, parenthesis, or separated from the expression body utilizing a double arrow or the like. By way of example, a lambda expression could take the form of "|x| x+1," "(x, y) x+1," or "x=>x+1." Further, a lambda expression without parameters could be specified differently, for example, utilizing "∥=" to clearly distinguish it from the conditional-or "∥." At 720, the value of the lambda expression is computed or evaluated. Such value could be of any type including but not limited to integer, Boolean, and string. At 730, the computed value is returned. For instance, if the lambda expression is specified as an argument, it could be returned to the calling statement or method. Alternatively, if the lambda expression is assigned to a function such as a delegate, the computed value could be returned thereto.

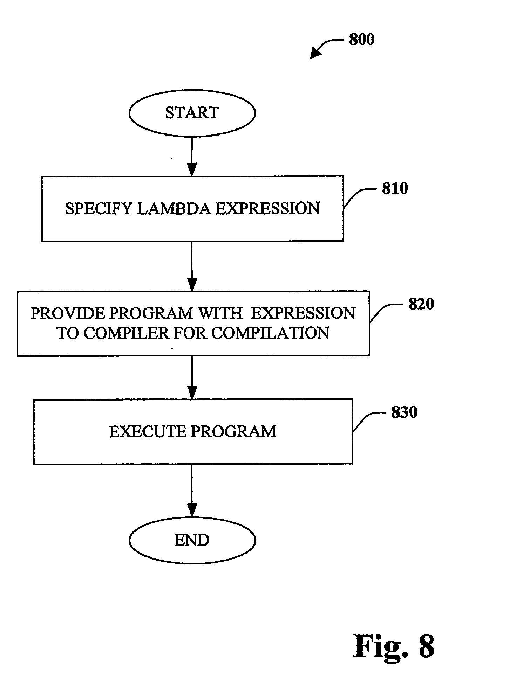

Fig. 8 illustrates a flow chart diagram of a programming methodology 800 associated with lambda expressions. At reference numeral 810, a lambda expression is specified. By way of example, a lambda expression could be specified manually, automatically, or semi-automatically with a code editor and/or integrated development environment. A lambda expression can include zero or more parameters as well as an expression or expression body as described *supra.* The lambda expression can be specified in any number of ways utilizing one or more symbols to delineate parameters from expressions. For instance, a lambda expression could be denoted "|c| c.age," "c =>c.age," or "(c) c.age." Furthermore, the lambda expression can be specified as an argument or assigned to function, among other things within a computer executable program. At numeral 820, a program including a lambda expression is provided to a compiler for compilation. From source code, the compiler could produce machine executable code or some intermediate code that could be further compiled at runtime for instance by a just-in-time (JIT) compiler. At 830, the code generated by the compiler is executed by a computer.

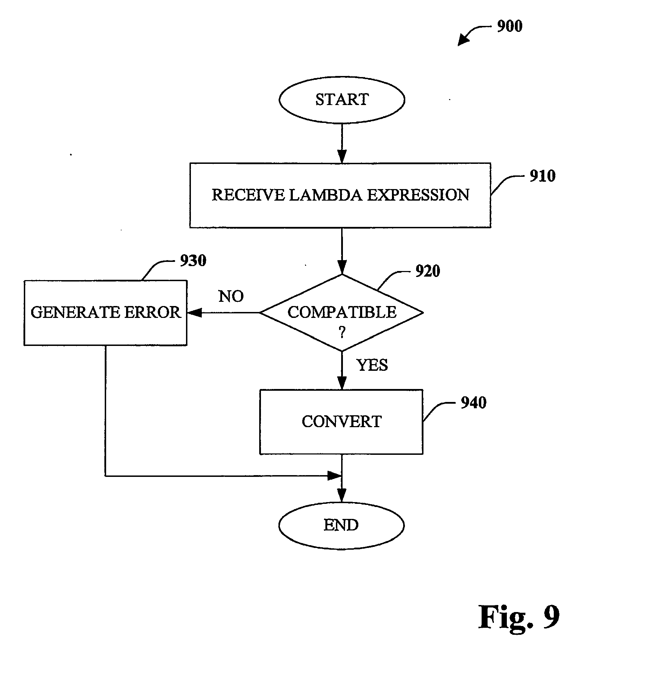

Fig. 9 depicts a method 900 of lambda expression conversion. Similar to an anonymous-method expression, a lambda expression can be classified as a value with special conversion rules. The value does not have a type, but can be converted to other compatible types such as a delegate type. At reference numeral 910, a lambda expression is received, retrieved or otherwise obtained or identified. The received lambda expression in this instance will be assigned to a particular type. For example:
delegate R Func<A,R>(A arg);
Func<int, int> f = |x|x + 1;
Here, the lambda expression is assigned to a delegate type function. At 920, a determination is made as to whether the lambda expression is compatible or convertible to the type to which it is assigned. Based on the assigned type there may be several conditions that need to be verified. For instance, to determine if a delegate type D is compatible with a lambda expression L, the following conditions may be verified: (1) D has a non-void return type and no ref or out parameters; (2) D and L have the same number of parameters and if L has an explicitly typed parameter list, the type of each parameter in D must be the same as the type of the corresponding parameter in L; and (3) When each parameter L is given the type of the corresponding parameter in D, the expression body of L is a valid expression that is implicitly convertible to the return type of D. If the compatibility conditions are not met at 920, then at 930 an error or exception is generated to indicate an attempt to convert a lambda expression to an incompatible type. If the conditions are satisfied at 920, then the conversion is allowed and the lambda expression converted at 940. In the example above, the lambda expression is successfully converted to the delegate type Func<int, int> because when x is give type int, x+1 is a valid expression that is implicitly convertible to type int. This assignment is equivalent to the more verbose form using an anonymous method:
Func<int, int> f = delegate(int x) {return x + 1};

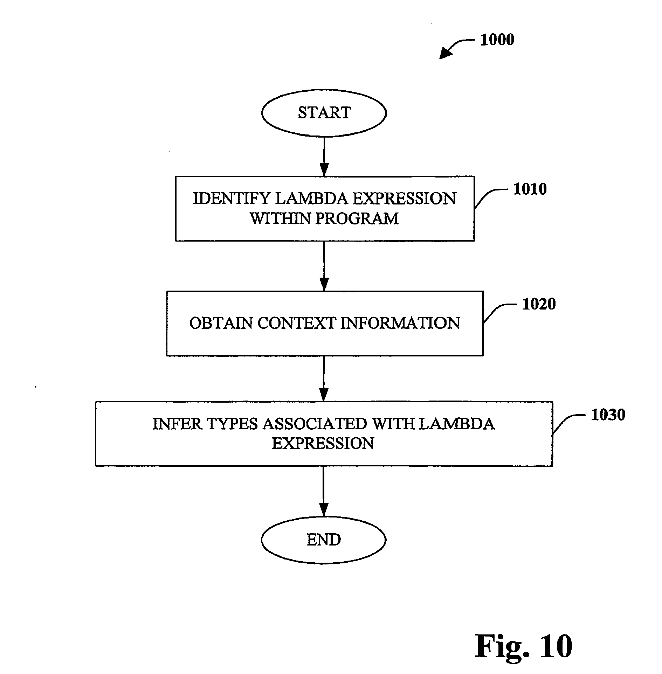

Fig. 10 is a type inference method 1000 for lambda expressions. At numeral 1010, a lambda expression is identified within a program. At 1020, context information related directly or indirectly to the lambda expression is obtained. Such context information can include classes, objects, functions, methods, and types among other things. For example, if a lambda expression is assigned to a function, the function provides context information. If the lambda expression is a method argument, the method provides context information. At reference numeral 1030, the types associated with the lambda expression are inferred. For instance, lambda expression parameters can be inferred based on the context information obtained. Lambda expression body elements and/or the return type can be determined base on the previous inferences and context information. By way of example, consider lambda expressions passed as arguments to a generic method. Type inference can first occur independently of each argument. In this initial phase, nothing is inferred from the arguments that are lambda expressions. However, following the initial phase, additional inferences can be made from lambda expressions using an iterative process. In particular, context information from the initial phase can be utilized to facilitate type inference along with the return type of the method. Such a process can be repeated until no further inferences can be made.

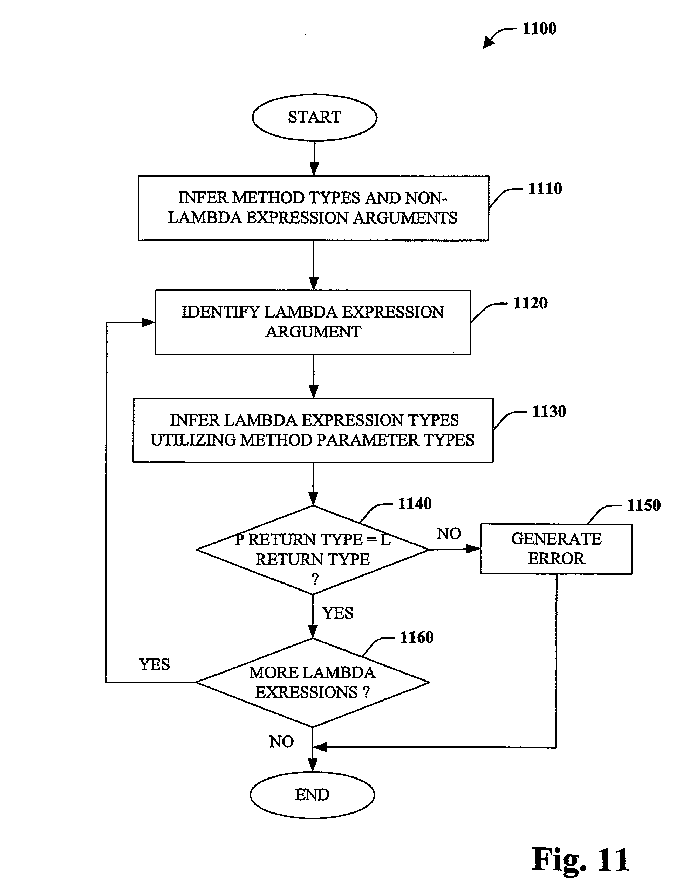

Fig. 11 depicts an exemplary type inference methodology 1100 to further appreciate how lambda expressions can participate in a type inference process. Method 1100 concerns employment of lambda expressions as method arguments. It should be appreciated that method 1100 can also be modified to deal with lambda expression assignments and other uses thereof. At reference numeral 1110, types are inferred for methods and non-lambda expression arguments, where necessary. At 1120, a lambda expression is identified as a method argument. Subsequently, at 1130, lambda expression types, such as parameter and expression element types, are inferred. The inference can be based on a current set of inferences, for example, including those related to the associated or calling method and/or other arguments thereof. At 1140, a check is made to determine if the method parameter return type is the same as the return type of the lambda expression. If no, then there has likely been an error code specification or inference. Accordingly, an error can be generated at 1150 and the method terminated. If the return types are the same, then the method can proceed to 1160 where a determination is made as to whether there are any more lambda expressions from which no inferences have been made. If there are, they are identified at 1120 the method proceeds from there. If there are no more lambda expressions, then the method terminates.

By way of example consider the following Select extension method in the following code snippet:

```
 Namespace System.Query
 {
       public static class Sequence
       {
             public static IEnumerable<S> Select<T,S>(
                   this IEnumerable<T> source, Func<T,S> selector)
             {
                   foreach (T element in source) yield return selector (element);
             }
       }
 }
```

The Select method may be employed to select a list of customers *via* the following code:
List<Customer> customers = GetCustomerList();
IEnumerable<string> names = customers.Select(|c| c.Name);
The extension method invocation of Select can be processed by rewriting (*e.g.,* by compiler) the invocation to a static method invocation such as:
IEnumerable<string> names = Sequence.Select(customers, |c| c.Name);
Since the type arguments of the above code snippet are not explicitly specified, they can be inferred. Since there is a non-lambda expression argument "customers," this type can be inferred first. Here, "customers" is related to the source parameter and is of type T. From the specific invocation, T can be inferred to be of type Customer. The lambda expression parameter c and the expression body c.Name are related to the selector parameter of the Select method. The lambda expression parameter c corresponds to type T, which has already been inferred to be of type Customer, so c is of type Customer. The expression body c.Name corresponds to the parameter S, which can be inferred to have type string. From the Customer type, class c.Name can be found to be of a particular type such as string. Thus, both the lambda expression body and the method parameter return types are of type string. Accordingly, type inference has completed successfully. The subject invocation is equivalent to the following explicitly typed method invocation:
Sequence.Select<Customer, string>(customers, |Customer c| c.Name);
The subject example illustrates how type information is determined and how it flows into the lambda expression from the calling method as well as non-lambda expression arguments thereof.

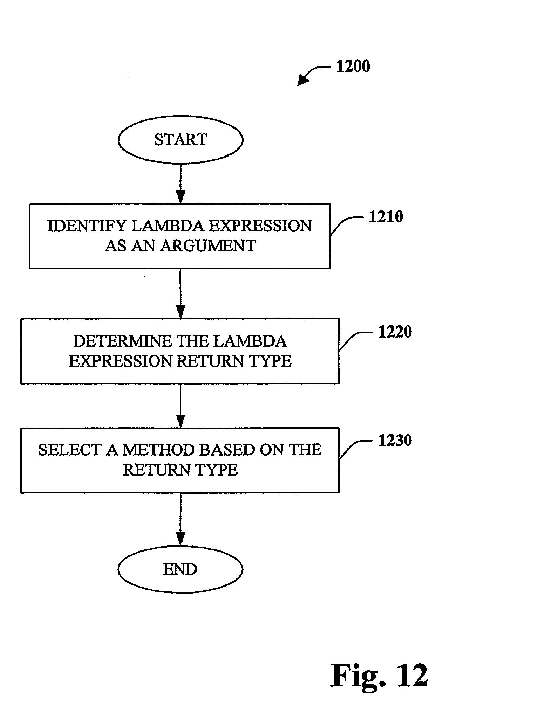

Turning to Fig. 12, a flow chart diagram is provided depicting a method of overload resolution 1200. More particularly, method 1200 illustrates how lambda expressions can be involved in resolving overloaded methods, for instance. At reference numeral 1210, a lambda expression is identified as a method argument, for instance. At 1220, the return type of the lambda expression is determined, for example by inference based on a set of inferences. Finally, at 1230, a particular overloaded method is selected based on the return type of a lambda expression. By way of example, consider a class that includes two Sum functions that return different results as follows:

```
 Class List<T>
 {
       int Sum (Func<T, int> f){...}
      double Sum (Func<T, double> f{...}
 }
```

Here, Sum is overloaded. Now suppose the following code is specified:
List<Product> ps
ps.Sum (|p| p.Price)
To determine which Sum to call and resolve the overload, the return type of the lambda expression must be determined. Here, it is denoted that ps is of type List<Product>. From this, it can be inferred that p is of type Product. Then, based on the Product class definition, the type of p.Price can be determined. Assume for this example that the definition reveals the p.Price is of type double. Now it is known that the specified code takes a Product and returns a double. Hence, the code is of type Func<Product, double>. From this knowledge, the second Sum can be selected. If the Product class definition had revealed that p.Price is of type integer, then the code would have been of type Func<Product, int>. In this scenario, although type integer is convertible to double, the first Sum function would have been selected, as it is a better match. As will be appreciated from this example, one does not have to first select one of the functions (*e.g.,* as would be done with structural typing), because based on the lambda expression return type the correct method or function can be selected.

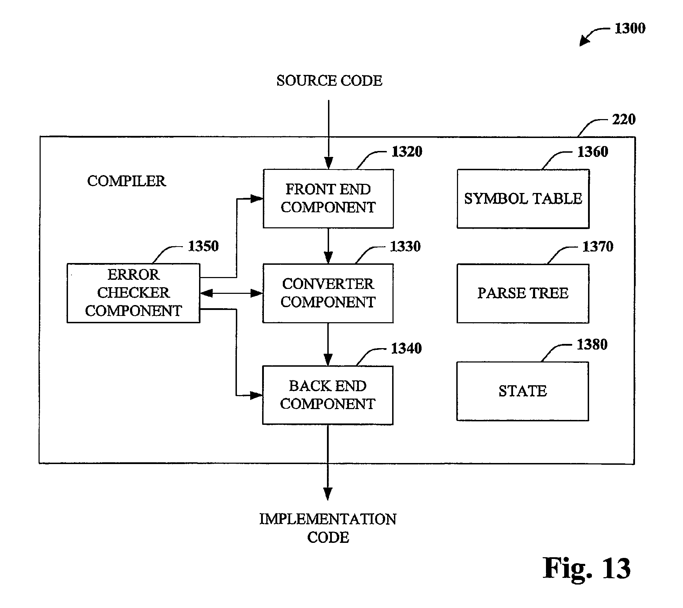

Fig. 13 is a block diagram depicting a compiler environment 1300 that can be utilized to produce implementation code (*e.g.,* executable, intermediate language...). The compiler environment 1300 includes a compiler 220 including front-end component 1320, converter component 1330, back-end component 1340, error checker component 1350, symbol table 1360, parse tree 1370, and state 1380. The compiler 220 accepts source code as input and produces implementation code as output. The input can include but is not limited to delimited programmatic expressions or qualified identifier as described herein. The relationships amongst the components and modules of the compiler environment illustrate the main flow of data. Other components and relationships are not illustrated for the sake of clarity and simplicity. Depending on implementation, components can be added, omitted, split into multiple modules, combined with other modules, and/or other configurations of modules.

Compiler 220 can accept as input a file having source code associated with processing of a sequence of elements. The source code may include lambda expressions and associated functions, methods and/or other programmatic constructs. Compiler 220 may process source code in conjunction with one or more components for analyzing constructs and generating or injecting code.

A front-end component 1320 reads and performs lexical analysis upon the source code. In essence, the front-end component 1320 reads and translates a sequence of characters (*e.g.,* alphanumeric) in the source code into syntactic elements or tokens, indicating constants, identifiers, operator symbols, keywords, and punctuation among other things.

Converter component 1330 parses the tokens into an intermediate representation. For instance, the converter component 1330 can check syntax and group tokens into expressions or other syntactic structures, which in turn coalesce into statement trees. Conceptually, these trees form a parse tree 1370. Furthermore and as appropriate, the converter module 1330 can place entries into a symbol table 1330 that lists symbol names and type information used in the source code along with related characteristics.

A state 1380 can be employed to track the progress of the compiler 1310 in processing the received or retrieved source code and forming the parse tree 1370. For example, different state values indicate that the compiler 1310 is at the start of a class definition or functions, has just declared a class member, or has completed an expression. As the compiler progresses, it continually updates the state 1380. The compiler 220 may partially or fully expose the state 1380 to an outside entity, which can then provide input to the compiler 220.

Based upon constructs or other signals in the source code (or if the opportunity is otherwise recognized), the converter component 1330 or another component can inject code corresponding to facilitate efficient and proper execution. Rules coded into the converter component 1330 or other component indicates what must be done to implement the desired functionality and identify locations where the code is to be injected or where other operations are to be carried out. Injected code typically includes added statements, metadata, or other elements at one or more locations, but this term can also include changing, deleting, or otherwise modifying existing source code. Injected code can be stored as one or more templates or in some other form. In addition, it should be appreciated that symbol table manipulations and parse tree transformations can take place.

Based on the symbol table 1360 and the parse tree 1370, a back-end component 1340 can translate the intermediate representation into output code. The back-end component 1340 converts the intermediate representation into instructions executable in or by a target processor, into memory allocations for variables, and so forth. The output code can be executable by a real processor, but the invention also contemplates output code that is executable by a virtual processor.

Furthermore, the front-end component 1320 and the back end component 1340 can perform additional functions, such as code optimization, and can perform the described operations as a single phase or in multiple phases. Various other aspects of the components of compiler 220 are conventional in nature and can be substituted with components performing equivalent functions. Additionally, at various stages during processing of the source code, an error checker component 1350 can check for errors such as errors in lexical structure, syntax errors, and even semantic errors. Upon detection error, checker component 1350 can halt compilation and generate a message indicative of the error.

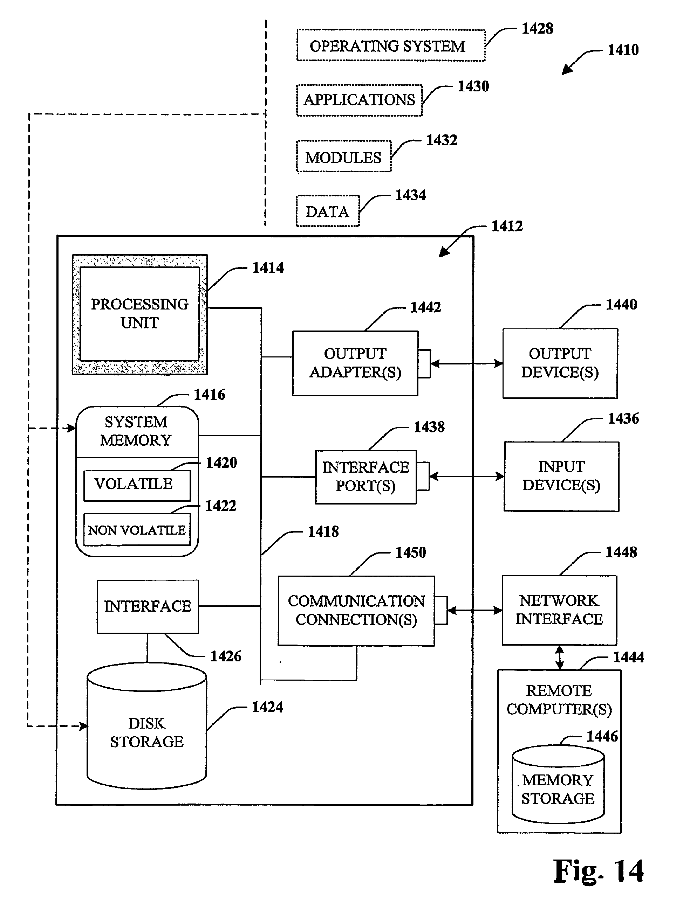

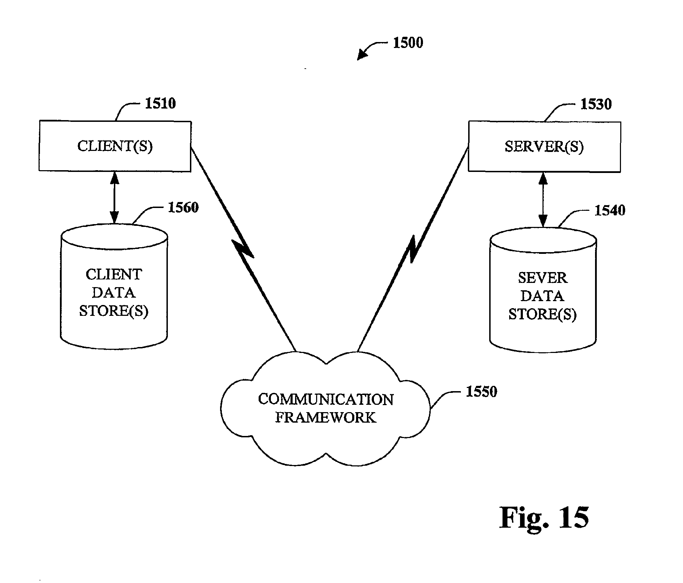

In order to provide a context for the various aspects of the disclosed subject matter, Figs. 14 and 15 as well as the following discussion are intended to provide a brief, general description of a suitable environment in which the various aspects of the disclosed subject matter may be implemented. While the subject matter has been described above in the general context of computer-executable instructions of a computer program that runs on a computer and/or computers, those skilled in the art will recognize that the invention also may be implemented in combination with other program modules. Generally, program modules include routines, programs, components, data structures, *etc*. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices (*e.g.,* personal digital assistant (PDA), phone, watch...), microprocessor-based or programmable consumer or industrial electronics, and the like. The illustrated aspects may also be practiced in distributed computing environments where tasks are performed by remote processing devices that are linked through a communications network. However, some, if not all aspects of the invention can be practiced on stand-alone computers. In a distributed computing environment, program modules may be located in both local and remote memory storage devices.

With reference to Fig. 14, an exemplary environment 1410 for implementing various aspects disclosed herein includes a computer 1412 (*e.g.,* desktop, laptop, server, hand held, programmable consumer or industrial electronics...). The computer 1412 includes a processing unit 1414, a system memory 1416, and a system bus 1418. The system bus 1418 couples system components including, but not limited to, the system memory 1416 to the processing unit 1414. The processing unit 1414 can be any of various available microprocessors. Dual microprocessors and other multiprocessor architectures also can be employed as the processing unit 1414.

The system bus 1418 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1416 includes volatile memory 1420 and nonvolatile memory 1422. The basic input/output system (BIOS), containing the basic routines to transfer information between elements within the computer 1412, such as during start-up, is stored in nonvolatile memory 1422. By way of illustration, and not limitation, nonvolatile memory 1422 can include read only memory (ROM), programmable ROM (PROM), electrically programmable ROM (EPROM), electrically erasable ROM (EEPROM), or flash memory. Volatile memory 1420 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1412 also includes removable/non-removable, volatile/nonvolatile computer storage media. Fig. 14 illustrates, for example, disk storage 1424. Disk storage 1424 includes, but is not limited to, devices like a magnetic disk drive, floppy disk drive, tape drive, Jaz drive, Zip drive, LS-100 drive, flash memory card, or memory stick. In addition, disk storage 1424 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1424 to the system bus 1418, a removable or non-removable interface is typically used such as interface 1426.

It is to be appreciated that Fig 14 describes software that acts as an intermediary between users and the basic computer resources described in suitable operating environment 1410. Such software includes an operating system 1428. Operating system 1428, which can be stored on disk storage 1424, acts to control and allocate resources of the computer system 1412. System applications 1430 take advantage of the management of resources by operating system 1428 through program modules 1432 and program data 1434 stored either in system memory 1416 or on disk storage 1424. It is to be appreciated that the present invention can be implemented with various operating systems or combinations of operating systems.

A user enters commands or information into the computer 1412 through input device(s) 1436. Input devices 1436 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1414 through the system bus 1418 *via* interface port(s) 1438. Interface port(s) 1438 include, for example, a serial port, a parallel port, a game port, and a universal serial bus (USB). Output device(s) 1440 use some of the same type of ports as input device(s) 1436. Thus, for example, a USB port may be used to provide input to computer 1412 and to output information from computer 1412 to an output device 1440. Output adapter 1442 is provided to illustrate that there are some output devices 1440 like displays (*e.g.,* flat panel and CRT), speakers, and printers, among other output devices 1440 that require special adapters. The output adapters 1442 include, by way of illustration and not limitation, video and sound cards that provide a means of connection between the output device 1440 and the system bus 1418. It should be noted that other devices and/or systems of devices provide both input and output capabilities such as remote computer(s) 1444.

Computer 1412 can operate in a networked environment using logical connections to one or more remote computers, such as remote computer(s) 1444. The remote computer(s) 1444 can be a personal computer, a server, a router, a network PC, a workstation, a microprocessor based appliance, a peer device or other common network node and the like, and typically includes many or all of the elements described relative to computer 1412. For purposes of brevity, only a memory storage device 1446 is illustrated with remote computer(s) 1444. Remote computer(s) 1444 is logically connected to computer 1412 through a network interface 1448 and then physically connected *via* communication connection(s) 1450. Network interface 1448 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit-switching networks like Integrated Services Digital Networks (ISDN) and variations thereon, packet switching networks, and Digital Subscriber Lines (DSL).

Communication connection(s) 1450 refers to the hardware/software employed to connect the network interface 1448 to the bus 1418. While communication connection 1450 is shown for illustrative clarity inside computer 1412, it can also be external to computer 1412. The hardware/software necessary for connection to the network interface 1448 includes, for exemplary purposes only, internal and external technologies such as, modems including regular telephone grade modems, cable modems, power modems and DSL modems, ISDN adapters, and Ethernet cards or components.

Fig. 15 is a schematic block diagram of a sample-computing environment 1500 with which the present invention can interact. The system 1500 includes one or more client(s) 1510. The client(s) 1510 can be hardware and/or software (*e.g.,* threads, processes, computing devices). The system 1500 also includes one or more server(s) 1530. Thus, system 1500 can correspond to a two-tier client server model or a multi-tier model (*e.g.,* client, middle tier server, data server), amongst other models. The server(s) 1530 can also be hardware and/or software (*e.g.,* threads, processes, computing devices). The servers 1530 can house threads to perform transformations by employing the present invention, for example. One possible communication between a client 1510 and a server 1530 may be in the form of a data packet adapted to be transmitted between two or more computer processes. The system 1500 includes a communication framework 1550 that can be employed to facilitate communications between the client(s) 1510 and the server(s) 1530. The client(s) 1510 are operatively connected to one or more client data store(s) 1560 that can be employed to store information local to the client(s) 1510. Similarly, the server(s) 1130 are operatively connected to one or more server data store(s) 1540 that can be employed to store information local to the servers 1530.

What has been described above includes examples of aspects of the claimed subject matter. It is, of course, not possible to describe every conceivable combination of components or methodologies for purposes of describing the claimed subject matter, but one of ordinary skill in the art may recognize that many further combinations and permutations of the disclosed subject matter are possible. Accordingly, the disclosed subject matter is intended to embrace all such alterations, modifications and variations that fall within the spirit and scope of the appended claims. Furthermore, to the extent that the terms "includes," "has" or "having" are used in either the detailed description or the claims, such terms are intended to be inclusive in a manner similar to the term "comprising" as "comprising" is interpreted when employed as a transitional word in a claim.

**The following is a list of further preferred embodiments of the invention:**
Embodiment 1: A computer program compilation system comprising:
   a context component that obtains context information related to a lambda expression; and
   an inference component that infers types associated with the lambda expression based on the context information provided by the context component.
Embodiment 2: The system of embodiment 1, further comprising a development component that facilitates specification of a lambda expression comprising zero or more implicitly and/or explicitly typed parameters and a body.
Embodiment 3: The system of embodiment 2, the lambda expression is in the form of one of |parameter(s)| body, | |= body, parameter(s)=> body, (parameter(s))=> body, parameter(s)==> body, and (parameter(s))==> body.
Embodiment 4: The system of embodiment 3, the body includes one of an expression and a statement block.
Embodiment 5: The system of embodiment 1, the context component retrieves context information from a function to which the lambda expression is assigned.
Embodiment 6: The system of embodiment 5, the inference component includes a validation component that compares a return type of the function with a return type of the lambda expression to verify the inferred type.
Embodiment 7: The system of embodiment 6, the function is one of delegate type and generic delegate type.
Embodiment 8: The system of embodiment 5, the context component retrieves context information from a lambda expression parameter class.
Embodiment 9: The system of embodiment 1, further comprising a type checker component that compares inferred types with one or more explicit types and generates an error if the explicit type does not match the inferred type.
Embodiment 10: The system of embodiment 1, further comprising a selection component that selects an overloaded method based on the return type of the lambda expression where the parameters of the lambda expression and the method are the same.
Embodiment 11: A computer-implemented lambda expression conversion methodology comprising:
   determining whether electronic representations of a lambda expression and a delegate type are compatible; and
   converting the lambda expression to the delegate type, if the expression and the type are compatible, otherwise generating an error.
Embodiment 12: The method of embodiment 11, determining compatibility comprising analyzing the delegate type, the lambda expression and delegate type are incompatible if the delegate type has a void return type or includes ref or out parameters.
Embodiment 13: The method of embodiment 12, determining compatibility comprises analyzing the parameters of each of the lambda expression and delegate type, the lambda expression and delegate type are incompatible if they have a different number of parameters and/or the corresponding parameters are of a different type.
Embodiment 14: The method of embodiment 13, determining compatibility comprises analyzing an expression body associated with the lambda expression, the lambda expression and the delegate type are compatible if the expression body is of the same type or is convertible to the return type of the delegate type.
Embodiment 15: A computer readable medium having stored thereon computer executable instructions for carrying out the method of embodiment 11.
Embodiment 16: A computer-implemented overload resolution method comprising:
   identifying a lambda expression in a method argument;
   determining a return type of the lambda expression; and
   selecting one of an overloaded method based on the return type.
Embodiment 17: The method of embodiment 16, selecting one of an overloaded method comprising selecting the method that has the same return type as the lambda expression.
Embodiment 18: The method of embodiment 16, selecting one of an overloaded method comprising choosing the method that has a return type that is compatible with the return type of the lambda expression.
Embodiment 19: The method of embodiment 16, determining the return type comprising obtaining context information related to the lambda expression and inferring the return type based on the context information.
Embodiment 20: A computer readable medium having stored thereon computer executable instructions for carrying out the method of embodiment 16.

## Claims

1. A computer program compilation system comprising:
a context component that obtains context information related to a lambda expression;
an inference component that infers types associated with the lambda expression based on the context information provided by the context component; and
a selection component that selects an overloaded method based on the return type of the lambda expression,
wherein the parameters of the lambda expression and the method are the same.

2. The system of claim 1, wherein the selection component is configured to select the overloaded method that has the same return type as the lambda expression.

3. The system of claim 1, wherein the selection component is configured to select the overloaded method by choosing the method that has a return type that is compatible with the return type of the lambda expression.

4. A computer-implemented overload resolution method comprising:
identifying a lambda expression in a method argument;
determining a return type of the lambda expression; and
selecting one of an overloaded method based on the return type.

5. The method of claim 5, wherein selecting one of an overloaded method comprises selecting the method that has the same return type as the lambda expression.

6. The method of claim 5, wherein selecting one of an overloaded method comprises choosing the method that has a return type that is compatible with the return type of the lambda expression.

7. The method of claim 5, wherein determining the return type comprises obtaining context information related to the lambda expression and inferring the return type based on the context information.

8. A computer-readable medium having stored thereon computer-executable instructions for carrying out an overload resolution method comprising:
identifying a lambda expression in a method argument;
determining a return type of the lambda expression; and
selecting one of an overloaded method based on the return type.

9. The medium of claim 8, wherein selecting one of an overloaded method comprises selecting the method that has the same return type as the lambda expression.

10. The medium of claim 8, wherein selecting one of an overloaded method comprises choosing the method that has a return type that is compatible with the return type of the lambda expression.

11. The medium of claim 8, wherein determining the return type comprises obtaining context information related to the lambda expression and inferring the return type based on the context information.
